# EUROPÄISCHE PATENTSCHRIFT

(11) **EP 2 880 267 B1**
(45) Veröffentlichungstag und Bekanntmachung des Hinweises auf die Patenterteilung: **20.07.2016**
(21) Anmeldenummer: 13745584.6
(22) Anmeldetag: 01.08.2013
(51) Int. Cl.: F01K 3/00, F25J 1/00, F01K 25/08

(54) **VERFAHREN UND VORRICHTUNG ZUR ERZEUGUNG ELEKTRISCHER ENERGIE**
METHOD AND DEVICE FOR GENERATING ELECTRICAL ENERGY
PROCÉDÉ ET DISPOSITIF POUR PRODUIRE DE L'ÉNERGIE ÉLECTRIQUE

(30) Priorität: 02.08.2012 EP 12005616
(43) Veröffentlichungstag der Anmeldung: 10.06.2015
(73) Patentinhaber: Linde Aktiengesellschaft, 80331 München (DE)
(72) Erfinder: ALEXANDER, Alekseev, 82515 Wolfratshausen (DE)
(74) Vertreter: Imhof, Dietmar
(86) Internationale Anmeldenummer: PCT/EP2013/002297
(87) Internationale Veröffentlichungsnummer: WO 2014/019698

(56) Entgegenhaltungen:
- US-A- 4 329 842
- US-A1- 2007 186 563
- US-A1- 2008 060 340
- US-A1- 2009 113 928
- US-A1- 2009 282 840
- US-A1- 2009 293 503

## Beschreibung

Die Erfindung betrifft ein Verfahren und Vorrichtung zur Erzeugung von elektrischer Energie gemäß dem Oberbegriff des Patentanspruchs 1 sowie eine entsprechende Vorrichtung.

Unter einer "tiefkalten Flüssigkeit" wird eine Flüssigkeit verstanden, deren Siedepunkt unterhalb der Umgebungstemperatur liegt und beispielsweise bei 220 K oder niedriger, insbesondere niedriger als 200 K liegt.

Die tiefkalte Flüssigkeit kann beim "Verdampfen" unter unterkritischem Druck stehen. Falls die tiefkalte Flüssigkeit aber auf einen überatmosphärischen Druck gebracht wird, der oberhalb des kritischen Drucks liegt, findet kein echter Phasenübergang ("Verdampfen"), sondern eine so genannte "Pseudo-Verdampfung" statt.

Das "Wärmetauscher-System" dient zur Abkühlung von Einsatzluft der Luftbehandlungsanlage in indirektem Wärmeaustausch mit einem oder mehreren kalten Strömen. Es kann aus einem einzelnen oder mehreren parallel und/oder seriell verbundenen Wärmetauscherabschnitten gebildet sein, zum Beispiel aus einem oder mehreren Plattenwärmetauscher-Blöcken.

Es sind Verfahren und Vorrichtungen bekannt, die Flüssigluft oder Flüssigstickstoff zur Netzregelung und Bereitstellung von Regelleistung in Stromnetzen verwenden. Zu Billigstromzeiten wird dabei die Umgebungsluft in einer Luftzerlegungsanlage mit integriertem Verflüssiger oder in einer separaten Verflüssigungsanlage verflüssigt und in einem als Tieftemperaturspeicher ausgebildeten Flüssigtank gespeichert. Zu Spitzenlastzeiten wird die verflüssigte Luft aus dem Speicher entnommen, in einer Pumpe auf den höheren Druck gebracht, danach bis auf etwa Umgebungstemperatur oder höher angewärmt. Diese warme Hochdruckluft wird danach in einer Entspannungseinheit bestehend aus einer Turbine oder mehreren Turbinen mit Zwischenerwärmung bis auf Umgebungsdruck entspannt. Die in der Turbineneinheit erzeugte mechanische Energie wird in einem Generator in elektrische Energie umgewandelt und als besonders wertvolle Energie ins elektrische Netz eingespeist. Derartige Systeme sind in WO 2007096656 und in DE 3139567 A1 beschrieben.

Der Erfindung liegt die Aufgabe zugrunde, ein derartiges System hinsichtlich seiner Wirtschaftlichkeit zu verbessern und insbesondere einen relativ einfachen apparativen Aufbau zu ermöglichen.

Diese Aufgabe wird durch die kennzeichnenden Merkmale des Patentanspruchs 1 gelöst. Gemäß der Erfindung wird also während des zweiten Betriebsmodus die tiefkalte Flüssigkeit im Wärmetauscher-System in indirekten Wärmeaustausch mit Erdgas gebracht, das dabei unter Druck verflüssigt oder pseudo-verflüssigt und anschließend unter niedrigem Druck als Flüssigkeit gewonnen wird. In der tiefkalten Flüssigkeit gespeicherte Kälte wird somit auf das Erdgas übertragen und damit nutzbringend verwertet im Gegensatz zu der ansonsten üblichen (Pseudo-)Verdampfung gegen einen Wärmeträger wie atmosphärische Luft oder heißen (Wasser-)Dampf. Damit wird die Anzahl von Hardwarekomponenten wie Wärmetauscher, Turbinen und/oder Verdichter reduziert; die Kosten für die gesamte Flüssigluftspeicheranlage werden vermindert und die Wirtschaftlichkeit dieser Anwendung erhöht.

Die Erdgasverflüssigung wird dabei in dem Wärmetauscher-System der Luftbehandlungsanlage durchgeführt, der ohnehin für die Abkühlung der Einsatzluft im ersten Betriebsmodus vorhanden ist. Je nach den Anforderungen der speziellen Luftbehandlungsanlage kann dabei das Erdgas unmittelbar in Gegenstrom mit der (pseudo-)verdampfenden Speicherflüssigkeit gebracht werden, oder es wird innerhalb des Wärmetauscher-Systems ein Kälteträgerkreislauf genutzt, wobei das Erdgas nur durch einen oder mehrere gemeinsame Wärmetauscherblöcke mit dem Kälteträger strömt. Solche Kälteträgersysteme sind aus Luftzerlegungsverfahren bekannt, bei denen die Kälte aus verflüssigtem Erdgas (LNG) auf Prozessströme der Luftzerlegung übertragen wird; sie können sinngemäß auf die vorliegende Anwendung übertragen werden.

Im Rahmen der Erfindung wird in dem zweiten Betriebsmodus mechanische Energie aus dem Hochdruck-Speicherfluid erzeugt, indem entweder das Speicherfluid selbst oder ein aus ihm abgeleitetes Fluid in der Gasexpansionseinheit arbeitsleistend entspannt wird. Das abgeleitete Fluid kann beispielsweise durch ein Gemisch des Speicherfluids mit einem oder mehreren anderen Fluiden gebildet werden, oder durch ein Reaktionsprodukt des Speicherfluids mit einem oder mehreren anderen Stoffen. Letzteres kann beispielsweise durch Verbrennungsabgas gebildet werden, wenn das Speicherfluid Sauerstoff enthält und zur Verbrennung eines Brennstoffs genutzt wird.

Der zu verflüssigende Erdgasstrom wird vor seiner Einleitung in das Wärmetauscher-System insbesondere auf einen geeigneten hohen Druck von beispielsweise 20 bis 200 bar, insbesondere 40 bis 80 bar, gebracht.

Vorzugsweise wird umgekehrt in dem ersten Betriebsmodus ein Strom verflüssigten Erdgases in das Wärmetauscher-System eingeleitet und dort verdampft oder pseudo-verdampft.

Damit kann die im zweiten Betriebsmodus auf das Erdgas übertragene Kälte im Prozess selbst wiederverwertet werden. Das verflüssigte Erdgas kann im ersten Betriebsmodus vorzugsweise ganz oder teilweise in eine Speichervorrichtung (Flüssigerdgastank) eingeleitet und von dort im zweiten Betriebsmodus wieder entnommen werden.

Grundsätzlich kann in dem zweiten Betriebsmodus die Luftverdichtungseinheit abgeschaltet werden; in diesem Fall wird Wärme für die (Pseudo-)Verdampfung der tiefkalten Flüssigkeit ausschließlich durch das zu verflüssigende Erdgas geliefert. In vielen Fällen kann es aber günstig sein, wenn auch in dem zweiten Betriebsmodus Einsatzluft in der Luftverdichtungseinheit verdichtet und in dem Wärmetauscher-System abgekühlt wird. Es erscheint zwar zunächst ungünstig, im zweiten Betriebsmodus, in dem der Energiepreis hoch ist, die Luftverdichtungseinheit weiter zu betreiben. Im Rahmen der Erfindung hat sich jedoch herausgestellt, dass damit überraschend hohe betriebstechnische Vorteile verbunden sind, weil die Luftverdichtungseinheit beim Umschalten zwischen den Betriebsmodi nicht aus- und eingeschaltet werden muss, sondern kontinuierlich weiterläuft. Außerdem kann die verdichtete Einsatzluftmenge als Hochdruckgas gewonnen und aus diesem zusätzlich elektrische Energie gewonnen werden.

In einer ersten Variante des erfindungsgemäßen Verfahrens wird in dem zweiten Betriebsmodus mindestens ein Teil der Erzeugung elektrischer Energie aus dem gasförmigen Hochdruck-Speicherfluid in dem Gasturbinen-Expander eines Gasturbinen-Systems eines Gasturbinen-Kraftwerks durchgeführt, wobei das Speicherfluid stromabwärts des Verdampfens dem Gasturbinen-System zugeleitet wird. Das Gasturbinen-System ist dabei Teil der Gasexpansionseinheit im Sinne des Patentanspruchs 1. Diese Nutzung des Gasturbinen-Systems selbst für die Gewinnung von Energie aus dem Hochdruck-Speicherfluid wird in den Patentansprüchen 5 und 6 sowie in der älteren deutschen Patentanmeldung 102011121011 und den dazu korrespondierenden Patentanmeldungen näher beschrieben.

Ein "Gasturbinen-System" weist eine Gasturbine (Gasturbinen-Expander) und eine Brennkammer auf. In der Gasturbine werden heiße Gase aus der Brennkammer arbeitsleistend entspannt. Das Gasturbinen-System kann außerdem einen mit der Gasturbine angetriebenen Gasturbinen-Verdichter aufweisen. Ein Teil der in der Gasturbine erzeugten mechanischen Energie wird üblicherweise zum Antrieb des Gasturbinen-Verdichters eingesetzt. Ein weiterer Teil wird regelmäßig zur Erzeugung elektrischer Energie in einem Generator umgesetzt.

Mindestens ein Teil der Erzeugung mechanischer Energie aus dem gasförmigen Hochdruck-Speicherfluid wird bei dieser Variante in dem Gasturbinen-System des Kraftwerks vorgenommen, also in einem im Kraftwerk ohnehin vorhandenen Apparat zur Umsetzung von Druckenergie in mechanische Antriebsenergie. Ein zusätzliches separates System zur arbeitsleistenden Entspannung des Hochdruck-Speicherfluids kann im Rahmen der Erfindung weniger aufwändig ausgebildet sein oder ganz entfallen. Im einfachsten Fall kann bei der Erfindung die gesamte Erzeugung von mechanischer Energie aus dem gasförmigen Hochdruck-Speicherfluid in dem Gasturbinen-System vorgenommen werden. Das Hochdruck-Speicherfluid wird dann zum Beispiel unter dem Druck, unter dem es (pseudo-)verdampft wird, dem Gasturbinen-System zugeleitet.

In einer zweiten Variante weist die Gasexpansionseinheit ein Heißgasturbinen-System auf, das mindestens einen Erhitzer und eine Heißgasturbine aufweist. Dabei wird die Erzeugung elektrischer Energie aus dem gasförmigen Hochdruck-Speicherfluid mindestens teilweise als arbeitsleistende Entspannung in einem Heißgasturbinen-System durchgeführt, das mindestens einen Erhitzer und eine Heißgasturbine aufweist. Hierbei findet die Erzeugung von Energie aus dem Hochdruck-Speicherfluid außerhalb des Gasturbinen-Systems statt.

Das "Heißgasturbinen-System" kann einstufig mit einem Erhitzer und einer einstufigen Turbine ausgebildet sein. Alternativ kann es mehrere Turbinen-Stufen, vorzugsweise mit Zwischenerhitzung, aufweisen. In jedem Fall ist es sinnvoll, hinter der letzen Stufe des Heißgasturbinen-Systems einen weiteren Erhitzer vorzusehen. Das Heißgasturbinen-System ist vorzugsweise mit einem oder mehreren Generatoren zur Erzeugung elektrischer Energie gekoppelt.

Unter "Erhitzer" wird hier ein System zum indirekten Wärmeaustausch zwischen einem Heizfluid und dem gasförmigen Speicherfluid verstanden. Hiermit kann Restwärme oder Abwärme auf das Speicherfluid übertragen und zur Energieerzeugung im Heißgasturbinen-System genutzt werden.

Die beiden Varianten können auch kombiniert werden, indem die Gasexpansionseinheit sowohl eine oder mehrere Heißgas-Turbinen als auch ein oder mehrere Gasturbinen-Systeme aufweist. Dabei wird das gasförmige Hochdruck-Speicherfluid in zwei Schritten entspannt, wobei der erste Schritt als arbeitsleistende Entspannung in dem Heißgasturbinen-System und der zweite Schritt in dem Gasturbinen-System durchgeführt werden, wobei das gasförmige Hochdruck-Speicherfluid dem Heißgasturbinen-System zugeleitet und dort auf einen Zwischendruck entspannt wird, und dem Heißgasturbinen-System ein gasförmiges Zwischendruck-Speicherfluid entnommen, das schließlich dem Gasturbinen-System zugeleitet wird.

Die Luftbehandlungsanlage, in welcher im ersten Betriebsmodus die tiefkalte Flüssigkeit erzeugt wird, kann als Tieftemperatur-Luftzerlegungsanlage oder als Luftverflüssigungsanlage ausgebildet sein.

Eine "Tieftemperatur-Luftzerlegungsanlage" wird mit atmosphärischer Luft beschickt und weist ein Destillationssäulen-System zur Zerlegung atmosphärischer Luft in ihre physikalischen Komponenten auf, insbesondere in Stickstoff und Sauerstoff. Hierzu wird die Einsatzluft zunächst in die Nähe ihres Taupunkts abgekühlt und dann in das Destillationssäulen-System eingeleitet.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Das Destillationssäulen-System der Erfindung kann als Ein-Säulen-System zur Stickstoff-Sauerstoff-Trennung ausgebildet sein, als Zwei-Säulen-System (zum Beispiel als klassisches Linde-Doppelsäulensystem), oder auch als Drei- oder Mehr-Säulen-System. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Eine "Luftverflüssigungsanlage" enthält keinen Destillationssäulen-Teil. Im Übrigen entspricht ihr Aufbau dem einer Tieftemperatur-Luftzerlegungsanlage mit der Abgabe eines Flüssigprodukts. Selbstverständlich kann auch in einer Tieftemperatur-Luftzerlegungsanlage Flüssigluft als Nebenprodukt erzeugt werden.

Die tiefkalte Flüssigkeit kann durch verflüssigte Luft und/oder Flüssigstickstoff gebildet werden, oder allgemein durch ein Fluid, das weniger Sauerstoff als die atmosphärische Luft enthält. Auch eine Kombination zweier oder mehrerer Speicherfluide gleicher oder unterschiedlicher Zusammensetzung aus der gleichen Luftbehandlungsanlage oder aus einer Mehrzahl von Luftbehandlungsanlagen kann im Rahmen der Erfindung eingesetzt werden.

Unter "Stickstoff' wird hier sowohl reiner oder im Wesentlichen reiner Stickstoff verstanden als auch ein Gemisch aus Luftgasen, dessen Stickstoffgehalt höher als derjenige der atmosphärischen Luft ist. Zum Beispiel weist der Flüssigstickstoff einen Stickstoffgehalt von mindestens 90 %, vorzugsweise mindestens 99 % auf. (Alle Prozentangaben beziehen sich hier und im Folgenden auf die molare Menge, soweit nichts anderes angegeben ist.)

Die Erfindung betrifft außerdem eine Vorrichtung zur Erzeugung von Energie gemäß Patentanspruch 9. Unter "Regeleinrichtung" ist hier eine Vorrichtung zu verstehen, welche zumindest die automatische Regelung des Systems während des ersten Betriebsmodus und während des zweiten Betriebsmodus bewerkstelligt. Vorzugsweise ist sie dazu in der Lage, den Übergang vom ersten in den zweiten Betriebsmodus und umgekehrt automatisch durchzuführen. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1a und 1b: die grundlegende Funktionsweise einer ersten Variante der Erfindung im ersten beziehungsweise zweiten Betriebsmodus,
- Figuren 2a und 2b: eine detailliertere Darstellung der Ausführungsform einer Luftbehandlungsanlage, die in dieser Variante eingesetzt werden kann,
- Figuren 3a und 3b: die grundlegende Funktionsweise einer weiteren Variante der Erfindung,
- Figuren 4a und 4b: eine detailliertere Darstellung der Ausführungsform einer Luftbehandlungsanlage, die in dieser zweiten Variante eingesetzt werden kann, und
- Figur 5: mögliche Ausführungsformen der Gasexpansionseinheit.

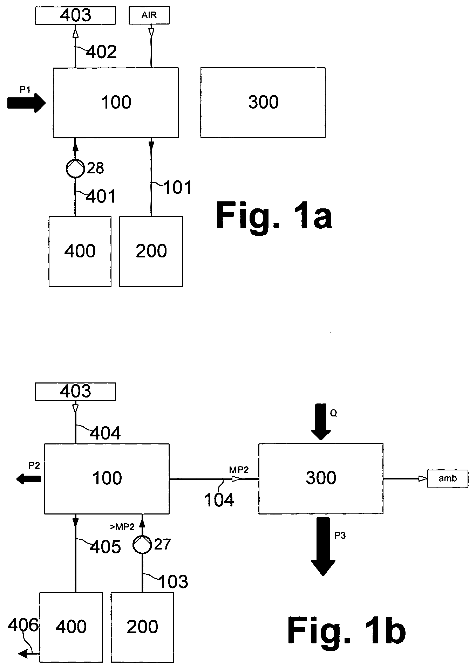

Die Gesamtanlage der Figuren 1 a und 1 b besteht aus drei Einheiten, einer Luftbehandlungsanlage 100, einem Flüssigtank 200 und einer Gasexpansionseinheit 300.

In **Figur 1a** ist der erste Betriebsmodus (Billigstromphase - in der Regel nachts) dargestellt. Hierbei wird atmosphärische Luft (AIR) als Einsatzluft in die Luftbehandlungsanlage 100 eingeleitet. In der Luftbehandlungsanlage wird eine tiefkalte Flüssigkeit 101 erzeugt, die beispielsweise als Flüssigluft ausgebildet ist. Die Luftbehandlungsanlage wird als Verflüssiger (insbesondere als Luftverflüssiger) betrieben. Die tiefkalte Flüssigkeit 101 wird in den Flüssigtank 200 eingeleitet, der unter einem niedrigen Druck LP von weniger als 2 bar betrieben wird. Der Energieverbrauch der Luftbehandlungsanlage im ersten Betriebsmodus wird als P1 bezeichnet.

In einem Flüssigerdgastank 400 wird verflüssigtes Erdgas (LNG) unter Niederdruck (< 2 bar) gespeichert. Aus diesem Tank 400 wird im ersten Betriebsmodus verflüssigtes Erdgas 401 entnommen, in einer Pumpe 28 auf einen hohen Druck von ca. 50 bar gebracht und in der Luftbehandlungsanlage 100 verdampft beziehungsweise pseudo-verdampft. Dabei wird die Verdampfungskälte für die Erzeugung der tiefkalten Flüssigkeit 101 genutzt. Das (pseudo-)verdampfte Erdgas wird einem oder mehreren Erdgas-Verbraucher zugeführt, zum Beispiel über ein Pipeline-System 403.

**Figur 1b** zeigt den zweiten Betriebsmodus (Spitzenstrom-Phase - in der Regel tagsüber). Die tiefkalte Flüssigkeit 103 (zum Beispiel Flüssigluft) wird aus dem Flüssigtank 200 entnommen, in einer Pumpe 27 auf einen erhöhten Druck von etwas mehr als MP2 (MP2 ist größer als 12 bar, beispielsweise gleich ca. 20 bar) gebracht, in der Luftbehandlungsanlage verdampft und bis auf etwa Umgebungstemperatur angewärmt und als gasförmige Hochdruck-Speicherfluid 104 abgezogen.

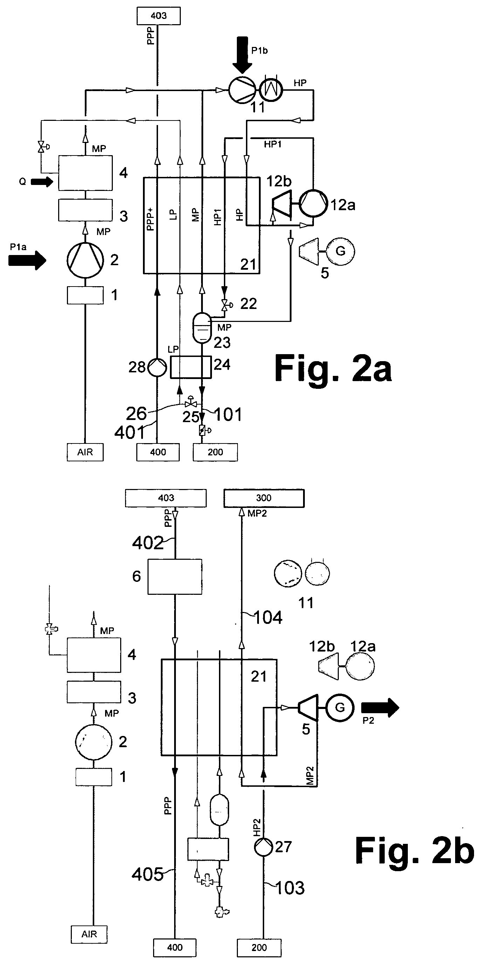

Das verdampfte Hochdruck-Speicherfluid 104 wird unter dem Druck MP2 zur Gasexpansionseinheit 300 geleitet. Die Leistung P3, die an der Gasexpansionseinheit 300 im zweiten Betriebsmodus zur Verfügung steht, beträgt beispielsweise 20 bis 70 %, vorzugsweise 40 bis 60 % der Leistung P1 im ersten Betriebsmodus. Zusätzlich wird Leistung P2 durch arbeitsleistende Entspannung in der Luftbehandlungsanlage (siehe Figur 2b) frei.

Die für die Verdampfung erforderliche Wärme wird erfindungsgemäß durch gasförmiges Erdgas 404 geliefert. Es stammt zum Beispiel aus dem Pipeline-System 403. Es wird unter einem Druck von ca. 50 bar in die Luftbehandlungsanlage 100 eingeleitet, nimmt den größten Teil der Verdampfungskälte der tiefkalten Flüssigkeit 103 auf und wird dabei pseudo-verflüssigt. Das verflüssigte Erdgas 405 wird auf Niederdruck entspannt und anschließend in flüssigem Zustand in den Flüssigerdgastank 400 eingeleitet. Ein Teil 406 kann abgezogen und für andere Zwecke genutzt werden.

Die Herstellung der tiefkalten Flüssigkeit und die LNG-Verdampfung einerseits und die Verdampfung der tiefkalten Flüssigkeit und die Erdgasverflüssigung andererseits werden vorzugsweise in denselben Prozesseinheiten durchgeführt. Im ersten und zweiten Betriebsmodus können somit dieselben Apparate genutzt werden. Dadurch ergibt sich ein relativ niedriger apparativer Aufwand.

Eine Verflüssigungsphase (durchgehender Betrieb im ersten Betriebsmodus) und eine Verdampfungsphase (durchgehender Betrieb im zweiten Betriebsmodus) können jeweils ein bis zehn Stunden dauern. Während eines Tages können jeweils eine oder mehrere Verdampfungs- und Verflüssigungsphasen gefahren werden. Je nach Bedarf kann die Luftbehandlungsanlage im Übergangszeitraum zwischen je zwei solchen Phasen abgeschaltet werden.

In den Figuren 2a und 2b ist eine mögliche Gestaltung der Luftbehandlungsanlage 100 der Figur 1 dargestellt, die hier als Luftverflüssiger ausgebildet ist.

**Figur 2a** zeigt wiederum den ersten Betriebsmodus (die Verflüssigungsphase). Hier wird Umgebungsluft (AIR) von einer Luftverdichtungseinheit 2 angesaugt und bis auf einen Druck MP (4 bis 8 bar, insbesondere 5 bis 8 bar) verdichtet, in einer Vorkühlungseinrichtung 3 gekühlt und in einer Molsiebadsorber-Station 4 getrocknet und von Kontaminationen wie CO₂ und Kohlenwasserstoffen gereinigt. Die verdichtete und gereinigte Luft wird zu einem separaten Verdichter, dem Kreislaufverdichter 11 geleitet und dort vom Druck MP aus zunächst bis auf einen höheren Druck HP von 20 bis 40 bar verdichtet, in einem Nachkühler bis auf etwa Umgebungstemperatur gekühlt und anschließend unter HP in einem Wärmetauscher-System 21 auf eine erste Zwischentemperatur von 140 bis 180 K abgekühlt. Die Luft wird unter der ersten Zwischentemperatur wird in einen ersten Teilstrom und einen zweiten Teilstrom aufgeteilt.

Der erste Teilstrom wird in einer Turbine 12b auf den Druck MP arbeitsleistend entspannt. Der arbeitsleistend entspannte erste Teilstrom der Einsatzluft wird in eine Phasentrenneinrichtung (Separator) 23 eingeleitet, um gegebenenfalls geringfügige Flüssiganteile abzutrennen. Die gasförmige Fraktion aus der Phasentrenneinrichtung 23 wird durch das Wärmetauscher-System 21 geleitet, dort angewärmt und gemeinsam mit der Luft aus der Molsiebadsorber-Station 4 zu dem Saugstutzen des Kreislaufverdichters 11 geführt und bildet damit einen Luftkreislauf.

Der zweite Teilstrom wird in einem Kaltverdichter 12a auf einen noch höheren Druck HP1 (beispielsweise 40 bis 80 bar) nachverdichtet. Der Kaltverdichter 12a wird über eine gemeinsame Welle von der Turbine 12b angetrieben. Die Austrittstemperatur des Kaltverdichters 12a ist etwa gleich der Umgebungstemperatur. Unter dem Druck HP1 wird der zweite Teilstrom wieder dem warmen Ende des Wärmetauscher-Systems 21 zugeführt, im Wärmetauscher-System 21 abgekühlt und pseudo-verflüssigt, in einem Drosselventil auf den Druck MP entspannt und schließlich in mindestens teilweise flüssigem Zustand in die Phasentrenneinrichtung 23 eingespeist. Die Flüssigkeit aus der Phasentrenneinrichtung 23 wird in einem Unterkühler 24 unterkühlt und zum größten Teil (101) als tiefkalte Flüssigkeit in den Flüssigtank 200 geleitet. Zur Unterkühlung wird eine Flüssigluftteilmenge 26 verwendet, die nach der Unterkühlung 24 entnommen wird, in einem Drosselventil 25 bis auf den Druck LP entspannt und durch das Wärmetauscher-System 21 geleitet wird. Diese Teilmenge kann auch als Regeneriergas für die Molsiebadsorber-Station 4 verwendet werden. Das Regeneriergas wird durch Dampf, Elektroerhitzer oder Erdgasfeuerung angewärmt (Wärmemenge Q). Alternativ wird die Molsiebadsorber-Station 4 während des ersten Betriebsmodus überhaupt nicht regeneriert, sondern lediglich im zweiten Betriebsmodus. Dauert der durchgehende Betrieb im ersten Betriebsmodus weniger als etwa 6 Stunden, ist dies ohne Weiteres möglich. Die Molsiebadsorber-Station wird dann innerhalb eines Betriebsmodus nicht umgeschaltet; sie kann dann auch mittels eines einzigen Adsorber-Behälters realisiert sein oder mittels mehrerer Behälter, die parallel betrieben werden.

Verflüssigtes Erdgas 401 wird aus dem Flüssigerdgastank 400 entnommen, in der Pumpe 28 auf den erforderlichen Druck PPP von ca. 50 bar verdichtet und durch das Wärmetauscher-System 21 geleitet und dabei (pseudo-)verdampft. Nach der Anwärmung wird es in das Erdgasnetz 403 eingespeist.

Im ersten Betriebsmodus wird Energie P1 = P1a + P1b in Form der Antriebsleistungen P1a für die Luftverdichtungseinheit und P1 b für den Kreislaufverdichter zugeführt, sowie gegebenenfalls die Wärmemenge Q für die Regeneriergaserhitzung. Abgeführt wird keine Energie (außer über die Nachkühler der Verdichter), sondern Energie wird in Form der tiefkalten Flüssigluft im Flüssigtank 200 gespeichert.

Anhand von **Figur 2b** wird nun der zweite Betriebsmodus beschrieben. Hier werden die Turbine 12b, der Kaltverdichter 12a, der Kreislaufverdichter 11, die Luftverdichtungseinheit 2 und die Joule-Thomson-Stüfe (Drosselventile, Separator 23 und Unterkühler 24) abgeschaltet.

Flüssigluft (LAIR) 103 wird aus dem Flüssigtank 200 entnommen, in einer Pumpe 27 auf den erforderlichen Druck HP2 von beispielsweise 50 bis 80 bar, vorzugsweise 50 bis 65 bar gebracht und in das Wärmetauscher-System 21 eingeleitet. Nach der Anwärmung auf eine zweite Zwischentemperatur von beispielsweise 120 bis 200 K, vorzugsweise 130 bis 180 K wird die Hochdruckluft in einer Generatorturbine 5 auf den Druck MP2 arbeitsleistend entspannt und schließlich als gasförmiges Hochdruck-Speicherfluid 104 zur Gasexpansionseinheit 300 geleitet.

Im Gegenstrom zu der (pseudo-)verdampfenden Luft 103 wird Erdgas 402 unter einem Druck PPP (ca. 50 bar) aus dem Pipeline-System 403 im Wärmetauscher-System 21 pseudo-verflüssigt. Vor dem Eintritt in das Wärmetauscher-System 21 wird das Erdgas vorzugsweise in einer Trocknungs- und Reinigungseinheit 6 gereinigt. Das auf Niederdruck entspannte und verflüssigte Erdgas 405 wird in den Flüssigerdgastank 400 eingeleitet.

Im zweiten Betriebsmodus wird der Luftverdichtungseinheit keinerlei Antriebsenergie zugeführt. (Die Energie zum Antrieb von Flüssigpumpen ist vernachlässigbar gering und wird hier daher nicht berücksichtigt.)

Alternativ zu der Darstellung in Figur 2b kann die Zwischenentspannung in der Generatorturbine 5 entfallen. Dann beträgt der Druck hinter der Pumpe 27 lediglich MP2 (plus Leitungsverlusten).

Wenn die Molsiebadsorber-Station 4 während des zweiten Betriebsmodus regeneriert wird, kann ein Teil des gasförmigen Hochdruck-Speicherfluids 104, ein Teil des in der der Gasexpansionseinheit 300 erhitzten gasförmigen Hochdruck-Speicherfluids oder ein Teil des Abgases der Gasexpansionseinheit 300 als Regeneriergas genutzt werden (in der Zeichnung nicht dargestellt).

Das Wärmetauscher-System 21 der Luftbehandlungsanlage wird sowohl für die Luftverflüssigung und Erdgasverdampfung (im ersten Betriebsmodus) als auch für die Luftverdampfung und Erdgasverflüssigung (im zweiten Betriebsmodus) genutzt.

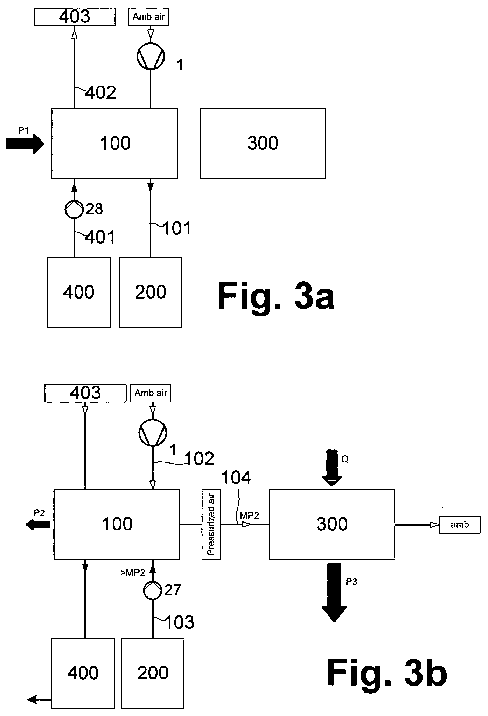

Die zweite Variante der Erfindung wird im ersten Betriebsmodus gemäß **Figur 3a** wie die erste Variante (Figur 1 a) betrieben.

**Figur 3b** entspricht im Wesentlichen Figur 1b, allerdings bleibt hier auch im zweiten Betriebsmodus die Luftverdichtungseinheit 1 in Betrieb.

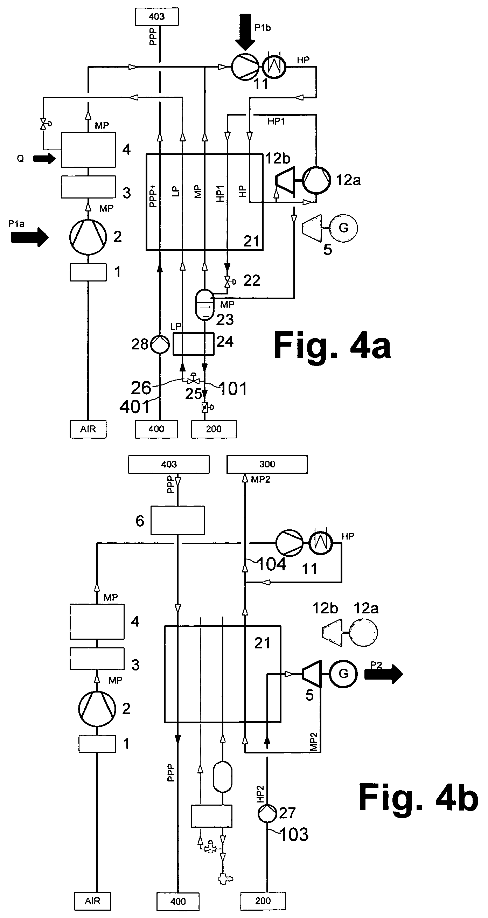

**Figur 4a** (erster Betriebsmodus) ist wiederum identisch mit Figur 2a.

**Figur 4b** weist die gleichen Bauteile wie Figur 2b auf, aber eine abweichende Verschaltung. Im hier dargestellten zweiten Betriebsmodus der zweiten Variante werden die Luftverdichtungseinheit 2, der Kreislaufverdichter 11 und die Turbine 5 weiter betrieben. Im Kreislaufverdichter 11 wird aus der verdichteten und gereinigten Luft, die aus der Molsiebadsorber-Station 4 kommt, Druckluft erzeugt. Diese wird mit der (pseudo-)verdampften Druckluft aus dem Wärmetauscher-System 21 vermischt.

Die Luftverdichtungseinheit 2 muss bei dieser Verfahrensführung auch im zweiten Betriebsmodus nicht abgeschaltet werden, sondern läuft permanent - sowohl im ersten als auch im zweiten Betriebsmodus. Dies ist betriebstechnisch günstig. Außerdem wird zusätzlich Druckluft erzeugt, die in der Gasexpansionseinheit 300 zur Energieerzeugung beiträgt.

Eine dritte Variante entspricht weitgehend der Figur 4b. Die Luft wird jedoch nicht im warmen Verdichter 11 nachverdichtet, sondern etwas abgekühlt und danach in einem kaltem Verdichter komprimiert (Kaltverdichter 12b aus Figur 2a/4a oder eine separate Maschine) und danach mit der verdampften Hochdruckluft vermischt und zur Gasexpansionseinheit 300 geführt.

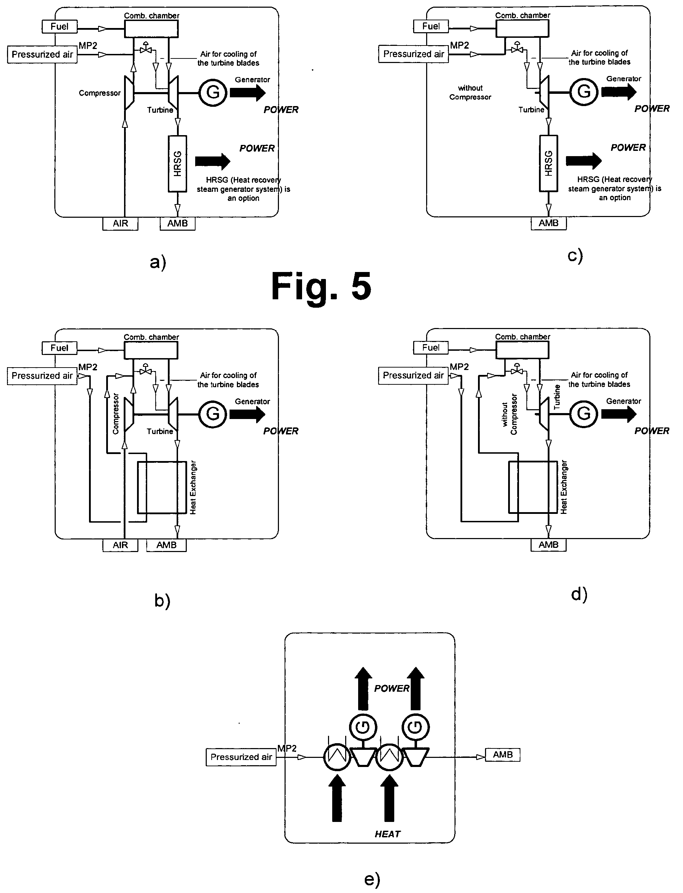

In der **Figur 5** sind mögliche Ausführungen der Gasexpansionseinheit 300 dargestellt.

In den Ausführungen 5a und 5b wird eine konventionelle Gasturbine zur Entspannung verwendet, die Druckluft aus der Luftbehandlungsanlage wird vor der Brennkammer in die Gasturbine eingespeist. Die Wärme des Rauchgases am Austritt kann in einem Abhitzekessel (HRSG - Heat Recovery Steam Generator) verwendet werden (5a); alternativ wird sie anders verwendet, zum Beispiel zur Vorwärmung der Druckluft aus der Luftbehandlungsanlage (5b).

In der Ausführungen 5c und 5d wird eine umgebaute Gasturbine zur Entspannung verwendet, bei dieser Gasturbine wird der Kompressorteil entfernt. Die Druckluft aus der Luftbehandlungsanlage wird in die Brennkammer der restlichen Gasturbine eingespeist. Die Wärme des Rauchgases kann ähnlich wie im Verfahren mit der Gasturbine verwendet werden.

In der Ausführung 5e wird die Druckluft aus der Luftbehandlungsanlage zuerst angewärmt und in mehreren nacheinander geschalteten Turbinen/Turbinenstufen entspannt, zwischen den einzelnen Entspannungsstufen wird die Luft zusätzlich angewärmt. Dies stellt ein Ausführungsbeispiel für eine Gasexpansionseinheit dar, die ein Heißgasturbinen-System aufweist, das mindestens einen Erhitzer und eine Heißgasturbine aufweist - hier sind es jeweils zwei Erhitzer und Heißgasturbinen; alternativ kann das Heißgasturbinen-System auch mehr als zwei Stufen aufweisen.

Die Ausführungsvarianten 5a und 5b sowie 5c und 5d können miteinander kombiniert werden.

## Patentansprüche

1. Verfahren zur Erzeugung elektrischer Energie in einem kombinierten System aus Kraftwerk und Luftbehandlungsanlage, wobei das Kraftwerk eine erste Gasexpansionseinheit (300) aufweist, die mit einem Generator zur Erzeugung elektrischer Energie verbunden ist, und die Luftbehandlungsanlage eine Luftverdichtungseinheit (2), ein Wärmetauscher-System (21) und einen Flüssigtank (200) aufweist, und wobei
in einem ersten Betriebsmodus
- in der Luftbehandlungsanlage
- Einsatzluft in der Luftverdichtungseinheit (2) verdichtet und in dem Wärmetauscher-System (21) abgekühlt wird,
- aus der verdichteten und abgekühlten Einsatzluft ein Speicherfluid hergestellt wird,
- das Speicherfluid als tiefkalte Flüssigkeit (101) in dem Flüssigtank (200) gespeichert wird,
und in einem zweiten Betriebsmodus
- tiefkalte Flüssigkeit (103) aus dem Flüssigtank (200) entnommen und unter überatmosphärischem Druck verdampft oder pseudo-verdampft wird, und das dabei erzeugten gasförmigen Hochdruck-Speicherfluid (104) in der Gasexpansionseinheit (300) entspannt wird,
**dadurch gekennzeichnet, dass** in dem zweiten Betriebsmodus
- gasförmiges Erdgas (404) in das Wärmetauscher-System (21) eingeleitet und dort verflüssigt oder pseudo-verflüssigt wird und
- die (Pseudo-)Verdampfung der tiefkalten Flüssigkeit (103) in dem Wärmetauscher-System (21) durchgeführt wird.

2. Verfahren nach Anspruch 1, **dadurch gekennzeichnet, dass** in dem ersten Betriebsmodus ein Strom verflüssigten Erdgases (401) in das Wärmetauscher-System (21) eingeleitet und dort verdampft oder pseudo-verdampft wird.

3. Verfahren nach Anspruch 1 oder 2, **dadurch gekennzeichnet, dass** auch im zweiten Betriebsmodus Einsatzluft in der Luftverdichtungseinheit (2) verdichtet wird.

4. Verfahren nach einem der Ansprüche 1 bis 3, **dadurch gekennzeichnet, dass** das Kraftwerk ein Gasturbinen-System mit Brennkammer, Gasturbinen-Expander und Generator aufweist und mindestens ein Teil des gasförmigen Hochdruck-Speicherfluids (104) in dem Gasturbinen-Expander eines Gasturbinen-Systems entspannt wird, wobei das Speicherfluid (104) stromabwärts des (Pseudo-)Verdampfens (21 dem Gasturbinen-System zugeleitet wird.

5. Verfahren nach einem der Ansprüche 1 bis 5, **dadurch gekennzeichnet, dass** die Gasexpansionseinheit ein Heißgasturbinen-System aufweist, das mindestens einen Erhitzer und eine Heißgasturbine aufweist.

6. Verfahren nach Anspruch 4 und 5, **dadurch gekennzeichnet, dass** das gasförmige Hochdruck-Speicherfluid in zwei Schritten entspannt wird, wobei der erste Schritt als arbeitsleistende Entspannung in dem Heißgasturbinen-System und der zweite Schritt in dem Gasturbinen-System durchgeführt werden, wobei das gasförmige Hochdruck-Speicherfluid dem Heißgasturbinen-System zugeleitet und dort auf einen Zwischendruck entspannt wird, und dem Heißgasturbinen-System ein gasförmiges Zwischendruck-Speicherfluid entnommen, das schließlich dem Gasturbinen-System zugeleitet wird.

7. Verfahren nach einem der Ansprüche 1 bis 6, **dadurch gekennzeichnet, dass** die Luftbehandlungsanlage (2) als Tieftemperatur-Luftzerlegungsanlage oder als Luftverflüssigungsanlage ausgebildet ist.

8. Verfahren nach einem der Ansprüche 1 bis 7, **dadurch gekennzeichnet, dass** die tiefkalte Flüssigkeit (3) durch verflüssigte Luft oder Flüssigstickstoff gebildet wird.

9. Vorrichtung zur Erzeugung elektrischer Energie mit einem kombinierten System aus Kraftwerk und Luftbehandlungsanlage, wobei das Kraftwerk eine erste Gasexpansionseinheit (300) aufweist, die mit einem Generator zur Erzeugung elektrischer Energie verbunden ist, und die Luftbehandlungsanlage
- eine Luftverdichtungseinheit (2) zum Verdichten von Einsatzluft,
- ein Wärmetauscher-System (21) zum Abkühlen von verdichteter Einsatzluft,
- Mittel zum Einleiten von in der Luftverdichtungseinheit (2) verdichteter Einsatzluft in das Wärmetauscher-System (21),
- Mittel zum Herstellen eines Speicherfluids aus der im Wärmetauscher-System (21) abgekühlten Einsatzluft,
- einen Flüssigtank (200) zum Speichern von Speicherfluid als tiefkalte Flüssigkeit (101),
- Mittel zum Entnehmen tiefkalter Flüssigkeit (103) aus dem Flüssigtank (200),
- Mitteln zur Erhöhung des Drucks der entnommenen tiefkalten Flüssigkeit (103) und
- Mittel zum Erzeugen eines gasförmigen Hochdruck-Speicherfluids (104) durch Verdampfen oder Pseudo-Verdampfen der druckerhöhten tiefkalten Flüssigkeit aufweist, und die Vorrichtung außerdem
- Mittel zum Einleiten des gasförmigen Hochdruck-Speicherfluids (104) in der Gasexpansionseinheit (300) und
- eine Regeleinrichtung und Steuerelemente aufweist, mit Hilfe derer sie in einem ersten und in einem zweiten Betriebsmodus gefahren werden kann, wobei in einem ersten Betriebsmodus
- in der Luftbehandlungsanlage
- Einsatzluft in der Luftverdichtungseinheit (2) verdichtet und in dem Wärmetauscher-System (12) abgekühlt wird,
- aus der verdichteten und abgekühlten Einsatzluft ein Speicherfluid hergestellt wird, das weniger als 40 mol-% Sauerstoff enthält,
- das Speicherfluid als tiefkalte Flüssigkeit (101) in dem Flüssigtank (200) gespeichert wird,
und in einem zweiten Betriebsmodus
- tiefkalte Flüssigkeit (103) aus dem Flüssigtank (200) entnommen und unter überatmosphärischem Druck verdampft oder pseudo-verdampft wird, und das dabei erzeugten gasförmigen Hochdruck-Speicherfluid (104) in der Gasexpansionseinheit (300) entspannt wird,
**dadurch gekennzeichnet, dass**
- die Vorrichtung außerdem Mittel zum Einleiten gasförmigen Erdgases (404) in das Wärmetauscher-System (21) aufweist und
- die Regeleinrichtung und die Steuerelemente so ausgebildet sind, dass in dem zweiten Betriebsmodus
- gasförmiges Erdgas (404) in das Wärmetauscher-System (21) eingeleitet und dort verflüssigt oder pseudo-verflüssigt und
- die (Pseudo-)Verdampfung der tiefkalten Flüssigkeit (103) in dem Wärmetauscher-System (21) durchgeführt wird.

## Claims

1. Method for generating electrical energy in a combined system made up of a power plant and an air treatment plant, wherein the power plant has a first gas expansion unit (300), which is connected to a generator for generating electrical energy, and the air treatment plant has an air compression unit (2), a heat exchanger system (21) and a liquid tank (200), and wherein
in a first operating mode
- in the air treatment plant
- feed air is compressed in the air compression unit (2) and cooled in the heat exchanger system (21),
- a storage fluid is produced from the compressed and cooled feed air,
- the storage fluid is stored as a cryogenic liquid (101) in the liquid tank (200),
and in a second operating mode
- cryogenic liquid (103) is taken from the liquid tank (200) and vaporized or pseudo-vaporized at superatmospheric pressure, and the gaseous high-pressure storage fluid (104) generated in the process is expanded in the gas expansion unit (300),
**characterized in that**, in the second operating mode,
- gaseous natural gas (404) is introduced into the heat exchanger system (21), where it is liquefied or pseudo-liquefied, and
- the (pseudo-)vaporization of the cryogenic liquid (103) is carried out in the heat exchanger system (21).

2. Method according to Claim 1, **characterized in that**, in the first operating mode, a stream of liquefied natural gas (401) is introduced into the heat exchanger system (21), where it is vaporized or pseudo-vaporized.

3. Method according to Claim 1 or 2, **characterized in that** feed air is also compressed in the air compression unit (2) in the second operating mode.

4. Method according to one of Claims 1 to 3, **characterized in that** the power plant has a gas turbine system with a combustion chamber, a gas turbine expander and a generator, and at least some of the gaseous high-pressure storage fluid (104) is expanded in the gas turbine expander of a gas turbine system, the storage fluid (104) being fed to the gas turbine system downstream of the (pseudo-)vaporization (21.

5. Method according to one of Claims 1 to 5, **characterized in that** the gas expansion unit has a hot-gas turbine system having at least one heater and a hot-gas turbine.

6. Method according to Claims 4 and 5, **characterized in that** the gaseous high-pressure storage fluid is expanded in two steps, the first step being carried out as a work-performing expansion in the hot-gas turbine system and the second step being carried out in the gas turbine system, the gaseous high-pressure storage fluid being fed to the hot-gas turbine system, where it is expanded to an intermediate pressure, and a gaseous intermediate-pressure storage fluid being taken from the hot-gas turbine system and finally being fed to the gas turbine system.

7. Method according to one of Claims 1 to 6, **characterized in that** the air treatment plant (2) is in the form of a cryogenic air separation plant or of an air liquefaction plant.

8. Method according to one of Claims 1 to 7, **characterized in that** the cryogenic liquid (3) is formed by liquefied air or liquid nitrogen.

9. Apparatus for generating electrical energy having a combined system made up of a power plant and an air treatment plant, wherein the power plant has a first gas expansion unit (300), which is connected to a generator for generating electrical energy, and
the air treatment plant has
- an air compression unit (2) for compressing feed air,
- a heat exchanger system (21) for cooling compressed feed air,
- means for introducing feed air compressed in the air compression unit (2) into the heat exchanger system (21),
- means for producing a storage fluid from the feed air cooled in the heat exchanger system (21),
- a liquid tank (200) for storing storage fluid as cryogenic liquid (101),
- means for taking cryogenic liquid (103) from the liquid tank (200),
- means for increasing the pressure of the cryogenic liquid (103) taken, and
- means for generating a gaseous high-pressure storage fluid (104) by vaporizing or pseudo-vaporizing the cryogenic liquid at elevated pressure, and the apparatus moreover has
- means for introducing the gaseous high-pressure storage fluid (104) into the gas expansion unit (300), and
- a control device and control elements, with the aid of which it can be operated in a first and in a second operating mode, wherein
in a first operating mode
- in the air treatment plant
- feed air is compressed in the air compression unit (2) and cooled in the heat exchanger system (12),
- a storage fluid which contains less than 40 mol% of oxygen is produced from the compressed and cooled feed air,
- the storage fluid is stored as a cryogenic liquid (101) in the liquid tank (200),
and in a second operating mode
- cryogenic liquid (103) is taken from the liquid tank (200) and vaporized or pseudo-vaporized at superatmospheric pressure, and the gaseous high-pressure storage fluid (104) generated in the process is expanded in the gas expansion unit (300),
**characterized in that**
- the apparatus moreover has means for introducing gaseous natural gas (404) into the heat exchanger system (21), and
- the control device and the control elements are formed in such a way that, in the second operating mode,
- gaseous natural gas (404) is introduced into the heat exchanger system (21), where it is liquefied or pseudo-liquefied, and
- the (pseudo-)vaporization of the cryogenic liquid (103) is carried out in the heat exchanger system (21).

## Revendications

1. Procédé de production d'énergie électrique dans un système constitué de la combinaison d'une centrale électrique et d'une installation de traitement d'air,
la centrale électrique présentant une première unité (300) de détente de gaz raccordée à un générateur de production d'énergie électrique et
l'installation de traitement d'air présentant une unité (2) de compression d'air, un système (21) d'échange de chaleur et une cuve (200) à liquide, et dans lequel
dans un premier mode de fonctionnement:
de l'air de charge est comprimé dans l'unité (2) de compression d'air de l'installation de traitement d'air et est refroidi dans le système (21) d'échange de chaleur,
un fluide d'accumulation est formé à partir de l'air de charge comprimé et refroidi et
le fluide d'accumulation est conservé dans la cuve (200) à liquide sous la forme d'un liquide (101) cryogénique,
et dans un deuxième mode de fonctionnement:
du liquide cryogénique (103) est prélevé dans la cuve (200) à liquide et est vaporisé ou pseudo-vaporisé sous pression supérieure à la pression atmosphérique, le fluide gazeux d'accumulation (104) sous haute pression ainsi formé étant détendu dans l'unité (300) de détente de gaz,
**caractérisé en ce que**
dans le deuxième mode de fonctionnement,
du gaz naturel (404) est introduit dans le système (21) d'échange de chaleur sous forme gazeuse pour y être liquéfié ou pseudo-liquéfié et
**en ce que** la (pseudo)vaporisation du liquide (103) cryogénique est réalisée dans le système (21) d'échange de chaleur.

2. Procédé selon la revendication 1, **caractérisé en ce que** dans le premier mode de fonctionnement, un écoulement de gaz naturel (401) liquéfié est introduit dans le système (21) d'échange de chaleur pour y être vaporisé ou pseudo-vaporisé.

3. Procédé selon les revendications 1 ou 2, **caractérisé en ce que** dans le deuxième mode de fonctionnement, de l'air de charge est également comprimé dans l'unité (2) de compression d'air.

4. Procédé selon l'une des revendications 1. à 3, **caractérisé en ce que** la centrale électrique présente un système de turbine à gaz doté d'une chambre de combustion, d'un détendeur de gaz à turbine et d'un générateur et **en ce qu'**au moins une partie du fluide gazeux d'accumulation (104) à haute pression est détendu dans le détendeur de gaz à turbine d'un système de turbine à gaz, le fluide d'accumulation (104) étant apporté dans le système de turbine à gaz en aval de la (pseudo)vaporisation (21.

5. Procédé selon l'une des revendications 1 à 5, **caractérisé en ce que** l'unité de détente de gaz présente un système de turbine à gaz chaud qui présente au moins un surchauffeur et une turbine à gaz chaud.

6. Procédé selon les revendications 4 et 5, **caractérisé en ce que** le fluide gazeux d'accumulation sous haute pression est détendu en deux étapes, la première étape étant réalisée comme détente avec production de travail dans le système de turbine à gaz chaud et la deuxième étape dans le système de turbine à gaz, le fluide gazeux d'accumulation sous haute pression étant apporté au système de turbine à gaz chaud pour y être détendu jusqu'à une pression intermédiaire, un fluide gazeux d'accumulation à pression intermédiaire étant prélevé dans le système de turbine à gaz chaud pour être enfin amené au système de turbine à gaz.

7. Procédé selon l'une des revendications 1 à 6, **caractérisé en ce que** l'installation (2) de traitement d'air est configurée comme installation de décomposition d'air à basse température ou comme installation de liquéfaction d'air.

8. Procédé selon l'une des revendications 1 à 7, **caractérisé en ce que** le liquide cryogénique (3) est formé d'air liquéfié ou d'azote liquide.

9. Ensemble de production d'énergie électrique, doté d'un système constitué de la combinaison d'une centrale électrique et d'une installation de traitement d'air, la centrale électrique présentant une première unité (300) de détente de gaz raccordée à un générateur de production d'énergie électrique,
l'installation de traitement d'air comprenant
une unité (2) de compression d'air qui comprime de l'air de charge,
un système (21) d'échange de chaleur qui refroidit l'air de charge qui a été comprimé,
des moyens permettant d'amener dans le système (21) d'échange de chaleur l'air de charge qui a été comprimé dans l'unité (2) de compression d'air,
des moyens de formation d'un fluide d'accumulation à partir de l'air de charge qui a été refroidi dans le système (21) d'échange de chaleur,
une cuve (200) à liquide qui accumule sous la forme d'un liquide cryogénique (101) le fluide d'accumulation,
des moyens de prélèvement du liquide cryogénique (103) dans la cuve (200) à liquide,
des moyens d'augmentation de la pression du liquide cryogénique (103) qui a été prélevé et
des moyens de formation d'un fluide gazeux d'accumulation (104) sous haute pression par vaporisation ou pseudo-vaporisation du liquide cryogénique dont la pression a été augmentée, l'ensemble présentant en outre
des moyens d'introduction du fluide gazeux d'accumulation (104) sous haute pression dans l'unité (300) de détente de gaz et
un dispositif de régulation et des éléments de commande à l'aide desquels il peut être conduit dans un premier et dans un deuxième mode de fonctionnement, tandis que dans le premier mode de fonctionnement,
dans l'installation de traitement d'air
de l'air de charge est comprimé dans l'unité (2) de compression d'air et est refroidi dans le système (12) d'échange de chaleur,
un fluide d'accumulation qui contient moins de 40 % en moles d'oxygène est formé à partir de l'air de charge qui a été comprimé et refroidi,
le fluide d'accumulation est conservé sous la forme d'un liquide cryogénique (101) dans la cuve (200) à liquide,
et que dans un deuxième mode fonctionnement,
un liquide cryogénique (103) est prélevé dans la cuve (200) à liquide et est vaporisé ou pseudo-vaporisé sous pression supérieure à la pression atmosphérique, le fluide gazeux d'accumulation (104) sous haute pression ainsi formé étant détendu dans l'unité (300) de détente de gaz,
**caractérisé en ce que**
l'ensemble présente en outre des moyens permettant d'introduire du gaz naturel (404) sous forme gazeuse dans le système (21) d'échange de chaleur,
**en ce que** le dispositif de régulation et les éléments de commande sont configurés de telle sorte que dans le deuxième mode de fonctionnement,
du gaz naturel (404) est introduit sous forme gazeuse dans le système (21) d'échange de chaleur pour y être liquéfié ou pseudo-liquéfié et
la (pseudo)vaporisation du liquide cryogénique (103) est réalisée dans le système (21) d'échange de chaleur.
